# EUROPÄISCHE PATENTSCHRIFT

(11) **EP 3 661 842 B1**
(45) Veröffentlichungstag und Bekanntmachung des Hinweises auf die Patenterteilung: **07.07.2021**
(21) Anmeldenummer: 18762010.9
(22) Anmeldetag: 01.08.2018
(51) Int. Cl.: B63B 35/44, E02D 7/06, G01K 11/00, E02D 13/00

(54) **WASSERFAHRZEUG**
VESSEL
BÂTEAU

(30) Priorität: 02.08.2017 DE 102017117552
(43) Veröffentlichungstag der Anmeldung: 10.06.2020
(73) Patentinhaber: Elmer, Karl-Heinz, 31535 Neustadt am Rübenberge (DE)
(72) Erfinder: Elmer, Karl-Heinz, 31535 Neustadt am Rübenberge (DE)
(74) Vertreter: Gramm, Lins & Partner Patent- und Rechtsanwälte PartGmbB
(86) Internationale Anmeldenummer: PCT/EP2018/070882
(87) Internationale Veröffentlichungsnummer: WO 2019/025494

(56) Entgegenhaltungen:
- EP-A1- 2 431 531
- EP-A2- 2 546 829
- EP-A2- 2 746 462
- WO-A2-2009/121336
- DE-A1-102004 043 128
- DE-U1-202014 005 397

## Beschreibung

Die Erfindung betrifft ein Wasserfahrzeug mit einem Rumpf, einer daran angeordneten Einbringeinrichtung, insbesondere Bohr- oder Rammeinrichtung, für ein im Wasser zu errichtendes Bauwerk und einem Kompressor sowie eine Druckluftverteileinrichtung für ein solches Wasserfahrzeug. Unter einem Wasserfahrzeug werden alle schwimmfähigen oder schwimmenden Einrichtungen verstanden, die in der Lage sind, eine Bohr- oder Rammeinrichtung zu tragen. Die Einrichtungen können mit einem Motor oder einem anderen Antrieb oder einem Segel ausgestattet sein, so dass die Einrichtung selbständig manövrieren kann. Alternativ weist die Einrichtung keinen Antrieb auf und muss zu dem jeweiligen Einsatzort geschleppt werden.

Zur Errichtung von Bauwerken, die auf oder in dem Grund eines Gewässers verankert werden, werden häufig Schiffe oder Wasserfahrzeuge eingesetzt, die mit einer Bohr- oder Rammeinrichtung zum Einbringen von Fundamenten, Trägern oder Rohren ausgestattet sind. Über diese Einbringeinrichtung werden Komponenten des Bauwerks mit dem Grund des Gewässers verankert. Beispiele für solche Bauwerke sind Windkraftanlagen, Bohrinseln oder Landeplattformen, insbesondere im Meer.

Durch das Rammen beispielsweise von Pfählen entsteht eine nicht unerhebliche Lärmbelastung, die vor allem hörempfindliche Meeressäuger schädigen kann. Durch die Lärmeinwirkung kann es zu Orientierungsstörungen sowie Schwerhörigkeiten kommen. Eine Maßnahme zur Dämpfung von Lärm ist ein sogenannter Blasenschleier, bei dem Druckluftschläuche rund um die Unterwasserbaustelle gelegt werden. Die Druckluftschläuche sind an Kompressoren angeschlossen, die Druckluft in die Schläuche auf dem Meeresboden pumpen. Die Druckluft steigt in Form eines Vorhangs aus Luftblasen auf und bildet damit eine physikalisch-akustisch dämpfende Barriere für die Schallwellen. Es ist bekannt, ein mit Düsenöffnungen versehendes Kunststoffrohr auf dem Meeresboden mit einem Radius um eine Baustelle auszulegen und während der Rammarbeiten mit Druckluft zu beschicken, um eine Schallminderung zu erreichen.

Aus der EP 2 746 462 A2 ist eine Vorrichtung zur Reduktion der Schallimmissionen bei Rammarbeiten auf See bekannt, die eine oder mehrere Fluiddüsen zur Abgabe von Gas oder Gas enthaltender Flüssigkeit aufweist.

Aus der EP 2 546 829 A2 ist ein Einrumpfschiff bekannt, welches ein Schallpegel senkendes Umhüllungselement aufweist, das durch Öffnen einer Absperrung an der Unterseite des Rumpfes in ein Gewässer einbringbar ist. Das Schallpegel senkende Umhüllungselement weist dabei Öffnungen zur Abgabe eines gasförmigen Stoffs auf.

Die DE 10 2014 113 676 A1 beschreibt einen Hydroschalldämpfer zur Minderung von Wasserschall, insbesondere in einem Bereich einer Baustelle bei einem in einen Unterwasserboden einzubringenden Gegenstand, sowie ein Verfahren zur Handhabung eines solchen Hydroschalldämpfers, bei dem der Hydroschalldämpfer von einem Wasserfahrzeug aus zu einem Gewässerboden abgelassen wird. Der Hydroschalldämpfer wird um das in den Gewässerboden einzubringende Bauteil herumgelegt und aus einer offenen Stellung in eine geschlossene Stellung gebracht. Der Hydroschalldämpfer kann an einer Trägerstruktur befestigte Schallminderungselemente aufweisen, darüber hinaus kann in einem Bodenelement ein Schlauch zur Erzeugung eines Blasenschleiers und/oder zur Erzeugung beziehungsweise Kontrolle eines Auftriebes gehalten sein. Weiter ist ein Wasserfahrzeug entsprechend dem Oberbegriff des Anspruchs 1 aus der Druckschrift EP 2 546 829 A2 bekannt.

Aufgabe der vorliegenden Erfindung ist es, ein Wasserfahrzeug bereitzustellen, mit welchem eine erleichterte Montage bei einer verbesserten Hydroschalldämpfung erfolgen kann.

Erfindungsgemäß wird diese Aufgabe durch ein Wasserfahrzeug mit den Merkmalen des Hauptanspruches gelöst. Vorteilhafte Ausgestaltungen und Weiterbildungen der Erfindung sind in den Unteransprüchen, der Beschreibung sowie den Figuren offenbart.

Das Wasserfahrzeug mit einem Rumpf, einer daran angeordneten Einbringeinrichtung, insbesondere einer Rammeinrichtung, für ein im Wasser zu errichtendes Bauwerk und einem z.B. an dem Rumpf oder einer separaten Tragkonstruktion angeordneten Kompressor mit zumindest einer von dem Kompressor in das Wasser führenden Druckluftleitung, die mit zumindest einer insbesondere unterhalb des Rumpfes angeordneten Druckluftverteileinrichtung gekoppelt ist, die eine horizontale Erstreckung und eine Vielzahl von zueinander beabstandeten Ausströmöffnungen zum Erzeugen eines Blasenstrahlschleiers unterhalb des Rumpfes aufweist, sieht vor, dass der Rumpf zumindest zwei Teilrümpfe aufweist, die zueinander beabstandet angeordnet und miteinander verbunden sind und dass sich zwischen den Teilrümpfen ein Freiraum befindet, in dem eine erste Druckluftverteileinrichtung angeordnet ist, die derart angeordnet und eingerichtet ist, einen Blasenschleier zu erzeugen, der den Freiraum zumindest teilweise umgibt und welcher Blasenschleier auch die Einbringeinrichtung, beziehungsweise den in den Unterwasserboden einzubringenden Gegenstand, umfänglich umgibt und wobei eine zweite Druckluftverteileinrichtung angeordnet ist, die sich um den Außenumfang des Rumpfes erstreckt. Durch die Ausgestaltung des Freiraumes zwischen den Teilrümpfen ist es möglich, einen Pfosten, ein Pylon oder einen anderen Gegenstand, der mit oder in dem Unterwasserboden verankert werden soll, oder aber auch eine Bohrvorrichtung kontrolliert zu handhaben und gleichzeitig eine verbesserte Schalldämpfung über einen Blasenschleier zu erreichen. Der Blasenschleier erstreckt sich zumindest teilweise, bevorzugt vollständig um den Freiraum herum und umgibt die Einbringeinrichtung beziehungsweise den in den Unterwasserboden einzubringenden Gegenstand umfänglich. Durch die Anordnung der Einbringeinrichtung innerhalb des Freiraumes zwischen den Teilrümpfen wird das Wasserfahrzeug Teil der Hydroschalldämpfeinrichtung und bildet den oberen Abschluss des Blasenschleiers. Der Blasenschleier, der unterhalb des Rumpfes durch die Druckluftverteileinrichtung erzeugt wird, steigt nach oben zur Oberfläche und umgibt dort entweder den Rumpf oder befindet sich innerhalb des Freiraumes oder umgibt den Freiraum zwischen den beiden Teilrümpfen, sofern die Strömungsbedingungen dies zulassen. Als Teilrumpf werden sowohl einzelne Rümpfe angesehen, die durch eine oder mehrere Querträger oder Traversen miteinander gekoppelt sind, ähnlich einem Katamaran, als auch bei einer U-förmigen Rumpfform jeder der beiden nach vorne ragenden Schenkel. Ebenso wird als Teilrumpfe angesehen, wenn in einem Wasserfahrzug ein Schacht und in dem Schachtboden oder in dem Boden eine Öffnung vorhanden ist, durch die der Zugang zu dem Gewässer ermöglicht wird. Die Teilrümpfe erstrecken sich dann in dem Bereich neben der Öffnung oder dem Schacht.

Die Druckluftverteileinrichtung bildet bevorzugt einen geschlossenen Umfang aus, bevorzugt um den einzubringenden Gegenstand herum geschlossen, so dass radial um die Einbringeinrichtung und um den in den Unterwassergrund einzubringenden Gegenstand ein umfänglich geschlossener Blasenschleier entstehen kann.

Die Druckluftverteileinrichtung kann als Rohr oder Schlauch ausgebildet sein, durch das oder den die Druckluft aus dem zumindest einen Kompressor geleitet wird. Zur Erzeugung eines Blasenschleiers sind die zueinander beabstandeten Ausströmöffnungen bevorzugt in einem gleichen Abstand zueinander in dem Rohr oder Schlauch ausgebildet. Es können Ausströmöffnungen mit unterschiedlichen Strömungsquerschnitten oder Durchmessern in der Druckluftverteileinrichtung angeordnet oder ausgebildet sein, um unterschiedliche Blasengrößen erzeugen zu können. Die Ausströmöffnungen mit unterschiedlichen Durchmessern und Auslassquerschnitten können gleichmäßig über den Umfang der Druckluftverteileinrichtung verteilt sein, um einen gleichmäßigen Blasenschleier zu erzeugen.

An der Druckluftverteileinrichtung können Ballasteinrichtungen angeordnet sein, um ein Absenken der Luftdruckverteileinrichtung zu ermöglichen und gleichzeitig ein Aufschwimmen oder Aufsteigen bei Einleitung von Druckluft zu vermeiden. Die Druckluftverteileinrichtung kann grundsätzlich schwimmfähig und absenkbar ausgebildet sein. Die Schwimmfähigkeit ist insbesondere durch Auftriebskörper an der Druckluftverteileinrichtung gegeben, die zum Absenken geflutet werden können. Die Druckluftverteileinrichtung weist insbesondere einen Rahmen auf, der entweder eigenständig schwimmfähig ist und über Ballastkörper abgesenkt werden kann oder der Auftriebskörper aufweist, die den Rahmen und die daran angeordneten Komponenten wie Trägerelement oder Trägerelemente, Hydroschalldämpferelemente oder andere Einrichtungen über Wasser halten. Der Rahmen kann teilbar ausgebildet sein. Der Rahmen kann einen absenkbaren Teil und einen schwimmfähigen Teil aufweisen, zwischen denen der Blasenschleier ausgebildet werden kann. Der absenkbare Teil kann mit dem schwimmfähigen Teil über ein Trägerelement oder mehrere Trägerelemente mit dem schwimmfähigen Teil gekoppelt sein, so dass sich nach dem Absenken ein schlauchartiges Gebilde ergibt, an dem z.B. Hydroschalldämpfer angeordnet sind. Die Hydroschalldämpfer können luftgefüllte Hohlkörper oder mit Schaumstoff gefüllt Körper sein, die bevorzugt eine flexible und/ oder elastische Hülle aufweisen.

Bevorzugt ist die Druckluftverteileinrichtung über zumindest eine Halteeinrichtung absenkbar an dem Rumpf des Wasserfahrzeuges befestigt, beispielsweise über Winden, Kabel oder Ketten oder Seile, sodass die Druckluftverteileinrichtung bei Bedarf abgesenkt und gegebenenfalls wieder von dem Unterwassergrund angehoben und an dem Rumpf fixiert oder auf das Wasserfahrzeug angehoben werden kann. Damit ist es möglich, Wartungsarbeiten durchzuführen, das Wasserfahrzeug zu einer weiteren Baustelle zu bewegen oder die Druckluftverteileinrichtung an oder auf dem Wasserfahrzeug zu lagern.

Es ist vorgesehen, dass sich eine Druckluftverteileinrichtung um den gesamten Außenumfang des Rumpfes herum erstreckt, also dass die beiden Teilrümpfe ebenso wie der zwischen den Teilrümpfen vorhandene Freiraum von der Druckluftverteileinrichtung umgeben ist. Die Druckluftverteileinrichtung bildet in dieser Ausführungsform eine äußere Umrahmung für das Wasserfahrzeug aus, sodass sich bei einem senkrechten Aufsteigen des Blasenschleiers der Rumpf innerhalb des Blasenschleiers befindet. Diese Druckluftverteileinrichtung kann wird in Kombination mit zumindest einer weiteren Druckluftverteileinrichtung eingesetzt, die sich innerhalb des Freiraumes befindet oder innerhalb des Freiraumes auf den Gewässerboden abgesenkt wurde.

Der Freiraum zwischen den Teilrümpfen kann vollständig von den Teilrümpfen umgeben sein, sodass sich ein Durchgang in dem Schiffsboden befindet, durch den die Einbringeinrichtung oder das in dem Gewässerboden zu verankernde Bauteil in das Wasser eingelassen und im Gewässerboden verankert werden kann. Ebenso kann durch den Durchgang eine Druckluftverteileinrichtung abgesenkt werden. Die beiden Teilrümpfe können auch über zumindest eine Traverse miteinander gekoppelt sein, ähnlich einem Katamaran, um einen größeren Freiraum zwischen den Teilrümpfen auszubilden. Bei nur einer Traverse wird ein seitlicher, insbesondere vom Bug oder Heck aus gesehen, freier Zugang erhalten. Wird die Traverse oder werden die Traversen oberhalb der Wasserlinie angeordnet, bildet der Freiraum einen Durchgang. Dadurch können beispielsweise schwimmfähige Gegenstände, die in dem Gewässerboden verankert werden sollen, zwischen die Teilrümpfe bewegt werden, ohne dass es eine Restriktion hinsichtlich der Länge des Gegenstandes gibt. An dem Wasserfahrzeug ist dann eine Hebeeinrichtung oder eine Halteeinrichtung angeordnet, über die der zu verankernde Gegenstand an dem Wasserfahrzeug gehalten wird, während das nicht gehaltene Ende abgesenkt und an der vorgesehenen Stelle in dem Gewässergrund verankert wird. Die Rumpfform des Wasserfahrzeuges kann auch U-förmig ausgebildet sein, mit zwei nach vorne gerichteten Teilrümpfen, die durch einen Querrumpf miteinander permanent verbunden sind. An dem Querrumpf kann insbesondere die Steuereinrichtung für das Wasserfahrzeug, eine Kraneinrichtung sowie für die Einbringeinrichtung angeordnet sein. Der Querrumpf kann auch zumindest Teile der Einbringeinrichtung tragen.

Um entweder den Blasenschleier klein zu machen oder aber zusätzlich zu einem den kompletten Rumpf umgebenden Blasenschleier einen kleineren, enger an dem zu verankernden Gegenstand befindlichen Blasenschleier zu erzeugen, ist in einer Weiterbildung der Erfindung vorgesehen, dass die Druckluftverteileinrichtung oder eine weitere Druckluftverteileinrichtung nur den Umfang des Freiraumes umgibt. Sofern der Freiraum nicht vollständig von dem Rumpf umschlossen ist, also einen seitlichen Zugang aufweist, überbrückt die Druckluftverteileinrichtung den zumindest einen seitlichen Zugang oder mehrere seitliche Zugänge, um so einen umfänglich geschlossenen Blasenschleier auszubilden, mit einem Umfang, der kleiner als der Umfang des gesamten Wasserfahrzeuges ist.

Um eine weitere Verbesserung der Schalldämpfung zu erreichen, ist in einer Weiterbildung der Erfindung vorgesehen, dass unterhalb des Rumpfes des Wasserfahrzeuges zumindest ein den zu verankernden Gegenstand seitlich umgebenes Trägerelement angeordnet ist, das bevorzugt den zu verankernden Gegenstand umfänglich vollständig umgibt. Durch ein vollständiges Umgeben des zu verankernden Gegenstandes über das Trägerelement oder die Trägerelemente können dann beispielsweise die Blasen des Blasenschleiers geführt und von einem seitlichen Ausweichen abgehalten werden. Neben einer vollständigen Einhüllung des zu verankernden Gegenstandes kann das zumindest eine Trägerelement den zu verankernden Gegenstand auch nur teilweise seitlich umgeben. Es können auch mehrere, den zu verankernden Gegenstand jeweils teilweise umgebende Trägerelemente angeordnet oder ausgebildet sein, die unterhalb des Rumpfes angeordnet sind, um zusammen eine Trägerelementstruktur auszubilden, die insgesamt den zu verankernden Gegenstand seitlich umgibt. An dem zumindest einen Trägerelement können gasgefüllte, flexible Dämpferelemente befestigt sein, die beispielsweise als Hohlkugeln, Schaumelemente, gefüllte Schläuche oder Hohlkörper oder Schaumkörper in beliebiger Formgebung ausgebildet sein können. Über die Kombination von Blasenschleier und Dämpferelementen wird ein aktiv-passives System zur Verminderung von Unterwasserschall bereitgestellt.

Das zumindest eine Trägerelement ist bevorzugt von dem Umgebungswasser durchströmbar, das heißt, dass es keine geschlossene oder nahezu geschlossene Oberfläche ausbildet, sodass nur ein geringer Strömungswiderstand durch das Trägerelement bereitgestellt wird.

In einer Weiterbildung der Erfindung ist vorgesehen, dass mehrere Trägerelemente teleskopierbar aneinander angeordnet sind, um entweder eine mehrschichtige Umhüllung bereitstellen zu können oder um bei unterschiedlichen Wassertiefen leicht eine Anpassung an die jeweiligen Bedingungen durch ein Ausfahren oder ineinander Einschieben der Trägerelemente ineinander zu ermöglichen. Dazu sind die Trägerelemente bevorzugt mit unterschiedlichen Durchmessern ausgestattet, die so abgestuft sind, dass der Außendurchmesser des jeweils inneren Trägerelementes kleiner als der Innendurchmesser des umgebenden Trägerelementes ist. Bei nicht runden Querschnitten sind zueinander korrespondierende Innen- und Außenabmessungen dergestalt vorgesehen, dass die Trägerelemente ineinander verschieblich gelagert sind, um die Länge des Gesamtträgerelementes zu verändern.

Das Trägerelement, das beispielsweise als Netz, Stahlrohrkonstruktion, Plattenkonstruktion und/oder als Gitter ausgebildet ist, kann an einem Rahmen befestigt sein, der unterhalb des Rumpfes angeordnet ist und zur Ausbildung einer Hydroschalldämpfereinrichtung auf den Gewässerboden abgesenkt wird. Neben dem Trägerelement, das an dem Rahmen befestigt und zur Lagerung innerhalb des Rahmens, der einen U-förmigen Querschnitt aufweisen kann, gelagert sein kann, kann eine Druckluftverteileinrichtung in oder an dem Rahmen oder in einem separaten Rahmen aus einem formstabilen Material gelagert sein. Der jeweilige Rahmen umgibt das zu verankernde Bauteil zumindest teilweise und sorgt für eine Beschwerung sowohl des Trägerelementes als auch der Druckluftverteileinrichtung. Darüber hinaus stellt der Rahmen den Kontakt mit dem Gewässerboden her. In einer kombinierten Anordnung der Druckluftverteileinrichtung und dem Trägerelement in dem Rahmen ist es möglich, jeweils nur eine dieser Komponenten in einem Rahmen anzuordnen.

Neben dem U-Profil können auch andere Profilformen für den Querschnitt des Rahmens vorgesehen sein, um beispielsweise das Trägerelement oder die Druckluftverteileinrichtung oder mehrere Trägerelemente und Druckluftverteileinrichtungen in sich aufzunehmen. So kann ein T-Profil, ein H-Profil oder eine Kombination aus einem U-Profil mit einem unterhalb angeordneten T-Profil vorgesehen sein. In den jeweils abgetrennten Bereichen des Rahmens können dann das Trägerelement und die Druckluftverteileinrichtung oder Druckluftverteileinrichtungen angeordnet sein, um dort separat an dem Rahmen befestigt und festgelegt zu werden. Der Rahmen kann Teil der Druckluftverteileinrichtung sein.

Der Rahmen ist vorzugsweise absenkbar an dem Rumpf befestigt, insbesondere über motorisch betriebene Winden oder andere Hebeeinrichtungen. Halteeinrichtungen wie Seile, Ketten oder Kabel können das Wasserfahrzeug mit dem Rahmen verbinden. Auch ist es möglich, dass die Kopplung des Wasserfahrzeuges mit dem Rahmen über das Trägerelement allein erfolgt. Der Rahmen kann Auftriebskörper aufweisen, die mit Luft oder einem anderen Gas gefüllt werden können, um ein Aufschwimmen und Bergen der Druckluftverteileinrichtung zu erleichtern.

Der Rahmen kann faltbar oder klappbar ausgebildet sein, um zu ermöglichen, dass bereits im Boden verankerte oder senkrecht stehende Komponenten von dem Rahmen und damit dem Blasenschleier beziehungsweise dem Trägerelement umgeben werden können. Der Rahmen wird dann im aufgeklappten Zustand in die Nähe des zu verankernden Gegenstandes gebracht und anschließend so gefaltet, bewegt, verschoben oder geklappt, dass die Druckluftverteileinrichtung und/oder das Trägerelement den zu verankernden Gegenstand möglichst vollumfänglich umgibt, um eine möglichst allseitige Hydroschalldämpfung zu ermöglichen.

Der Rahmen kann aus miteinander verbundenen Segmenten ausgebildet sein, wobei die Verbindungsstellen der Segmente eine Relativbewegung der Segmente zueinander zulassen. Neben einer klappbaren Ausgestaltung oder faltbaren Ausgestaltung ist auch eine verschiebliche Lagerung von mehreren Rahmenkomponenten zueinander möglich, um einen möglichst geschlossenen Umfang des Rahmens zu erzeugen.

Im Rahmen kann ein Antrieb zum Öffnen oder Schließen zugeordnet sein, um den Rahmen aufzuklappen, aufzufalten oder zum Öffnen oder Schließen zu verschieben.

Ausströmöffnungen in der Druckluftverteileinrichtung können in unterschiedlichen Richtungen orientiert sein, um einen breiteren Blasenschleier oder aber auch einen Blasenschleier mit zwei Radien zu erzeugen, beispielsweise wenn die Ausströmöffnungen in zueinander entgegengesetzten Richtungen im Wesentlichen horizontal orientiert sind. Die Blasenschleier können sich innerhalb und/oder außerhalb des Trägerelementes oder der Trägerelemente nach oben an die Wasseroberfläche erstrecken, je nach Anordnung de Ausströmöffnungen und nach Ausrichtung der Öffnungen nach innen, außen oder in beide Richtungen.

Es können mehrere Druckluftverteileinrichtungen in unterschiedlichen Höhen angeordnet sein, wobei in einer Weiterbildung die Druckluftverteileinrichtungen in unterschiedlichen Höhen unterschiedlich große Ausströmöffnungen und/oder unterschiedlich große Innendrücke aufweisen, um dadurch eine Variation der Schalldämpfung auf unterschiedlichen Ebenen zu erreichen. Grundsätzlich ist es auch möglich, dass auch eine einzige Druckluftverteileinrichtung bereichsweise unterschiedlich große Ausströmöffnungen aufweist, beispielsweise wenn Strömungsverhältnisse oder Schallausbreitungsvorzugsrichtungen zu berücksichtigen sind.

Offenbart wird ebenfalls eine Druckluftverteileinrichtung als solche, wie sie oben beschrieben worden ist. Die Druckluftverteileinrichtung ist an ein Wasserfahrzeug anbringbar und zumindest teilweise absenkbar, so dass im Bereich des Wasserfahrzeuges unterhalb des Rumpfes ein Blasenschleier ausgebildet werden kann. Die Druckluftverteileinrichtung kann auch eigenständig schwimmfähig sein. Als Ballast für die Druckluftverteileinrichtung, die als Schlauch ausgebildet sein kann, kann diese mit einer Kette oder anderen Ballastelementen versehen sein, um ein ungewolltes Aufschwimmen der Drucklufteinrichtung zu vermeiden. Ein Rahmen kann absenkbar als Teil der Druckluftverteileinrichtung ausgebildet sein. Kompressoren zur Erzeugung von Druckluft können auf dem schwimmfähigen Teil der Druckluftverteileinrichtung angeordnet sein, um ein autonomes Modul zur Hydroschalldämmung bereitstellen zu können.

Nachfolgend werden Ausführungsbeispiele der Erfindung anhand der beigefügten Figuren näher erläutert. Es zeigen:
- Figuren 1 bis 4: verschiedene Ablaufphasen einer Verankerung eines Bauteils in einem Gewässerboden;
- Figur 5: eine Draufsicht auf ein Wasserfahrzeug bei der Vorbereitung einer Verankerung;
- Figur 6: eine Draufsicht auf ein Wasserfahrzeug gemäß Figur 3;
- Figur 7: Draufsichten auf Rumpfvarianten;
- Figur 8: eine erste Ausgestaltung einer Schalldämpfeinrichtung während der Verankerung;
- Figur 9: Kombination aus Hydroschalldämpferelementen und einem Blasenschleier;
- Figur 10: eine Seitenansicht und eine Draufsicht auf eine Variante der Schalldämpfeinrichtung;
- Figur 11: eine Frontalansicht der Figur 10;
- Figur 12: eine Detailansicht der Schalldämpfeinrichtung gemäß Figuren 10 und 11;
- Figur 13: eine Variante der Figur 11;
- Figur 14: eine Variante mit einem das Wasserfahrzeug umgebenden Blasenschleier;
- Figur 15: eine Detailansicht eines Blasenschleiers;
- Figur 16: eine Frontalansicht der Figur 14; sowie
- Figur 17: eine Gesamtdarstellung der Schalldämpfeinrichtungen an einem Wasserfahrzeug.

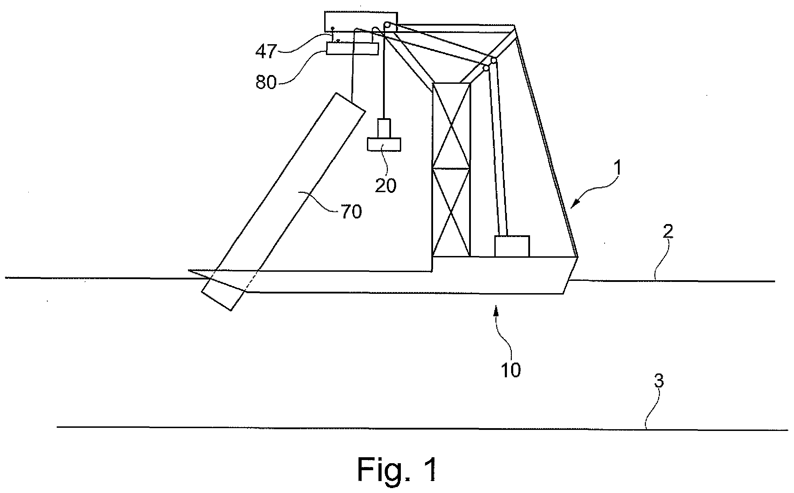

Die Figuren 1 bis 4 zeigen verschiedene Phasen einer Installation eines in einem Wasser zu verankernden Gegenstandes 70, im dargestellten Ausführungsbeispiel eines Pfahles, der in einem Gewässerboden 3 unterhalb einer Wasseroberfläche 2 verankert werden soll. Dazu ist ein Wasserfahrzeug 1 in Gestalt eines Schiffes vorgesehen, das einen Rumpf 10 aufweist, an dem eine Einbringeinrichtung 20 in Gestalt eines Rammhammers angeordnet ist. Die Einbringeinrichtung 20 ist über ein Seilzugsystem mit Antrieb an einem Gestell oder einem Kran auf dem Rumpf 10 gehalten und befindet sich in einer Wartestellung. Der auf dem Gewässerboden 3 zu verankernde Gegenstand 70 ist zunächst schwimmfähig ausgebildet und wird über eine Kraneinrichtung an einem Ende aus dem Wasser gehoben. Oberhalb der Kraneinrichtung ist ein Rahmen 80 befestigt, der über Halteeinrichtungen 47 absenkbar an der Kraneinrichtung, insbesondere an einer Traverse, befestigt ist. Der Pfahl 70 ist in der Figur 1 teilweise aus dem Wasser angehoben und befindet sich nahezu in der senkrechten Position, von der aus er auf den Gewässergrund 3 abgelassen werden soll. Der Rahmen 80 befindet sich oberhalb des Gegenstandes 70 in einer Ausgangsposition und beinhaltet Einrichtungen zur Dämpfung eines Hydroschalls und gegebenenfalls zur Erzeugung eines Blasenschleiers.

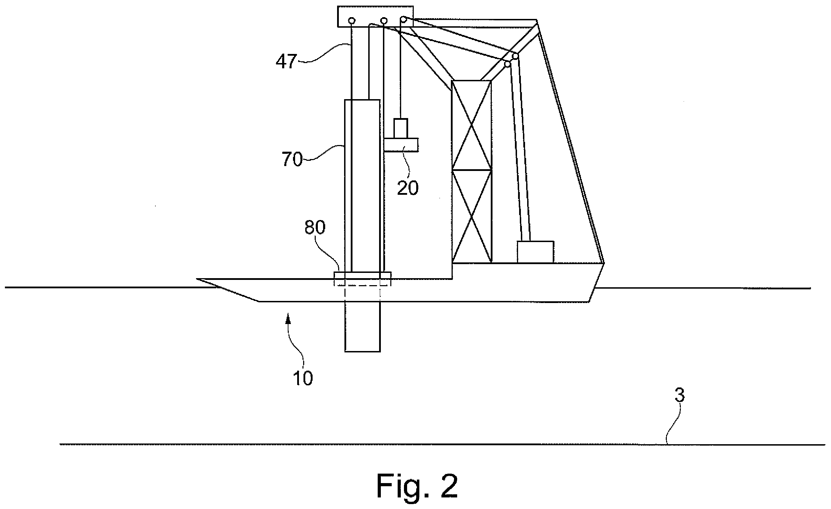

Figur 2 zeigt den Gegenstand 70 in einer senkrechten Position oberhalb derjenigen Stelle auf dem Gewässergrund 3, an der der Pfahl 70 eingebracht, insbesondere eingerammt werden soll. Der Rahmen 80 befindet sich in einer abgesenkten Position auf Höhe der Gewässeroberfläche 2 und wurde an Seilen, Gurten oder Ketten abgesenkt.

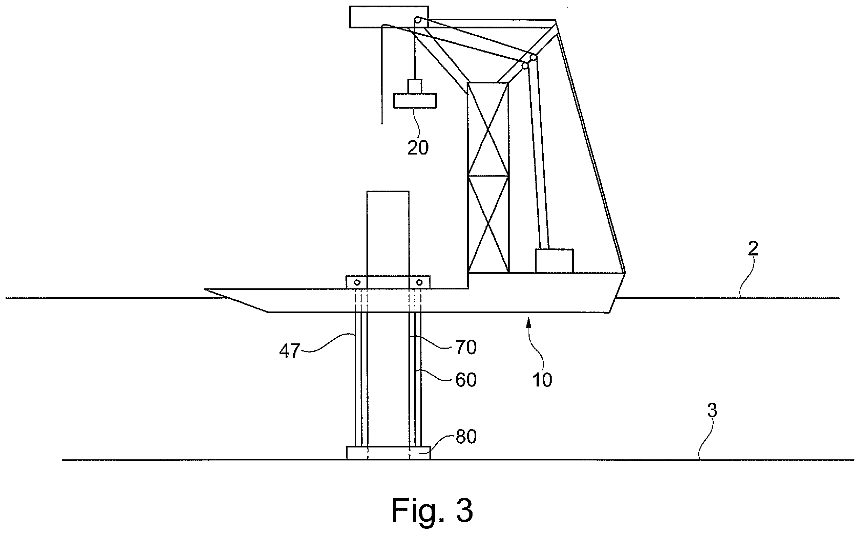

In der Figur 3 befindet sich der Pfahl 70 auf dem Gewässergrund 3 in der gewünschten Position, der Rahmen 80 mit den Halteeinrichtungen 47, beispielsweise Seile, die an Winden auf dem Rumpf befestigt sind, sowie einem schlauchartigen Trägerelement 60 sind abgelassen. Das schlauchartige Trägerelement 60, insbesondere als Netz oder Gitter ausgebildet, erstreckt sich vollumfänglich um den Pfahl 70, die Halteeinrichtungen 47 laufen im Wesentlichen parallel zu der Längserstreckung des Pfahls 70.

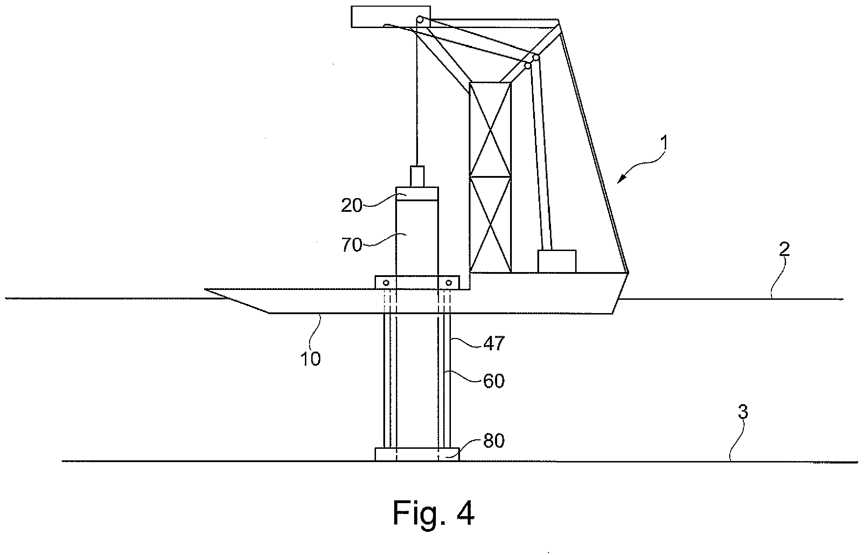

Figur 4 zeigt, dass in einer nächsten Phase das Wasserfahrzeug 1 sich etwas nach vorne bewegt hat, sodass die Einbringeinrichtung 20, beispielsweise ein Hammer, oberhalb des Pfahls 70 angeordnet und auf diesen aufgesetzt wird. In einer solchen Position kann das Rammen des Pfahls 70 beginnen. Während des Rammens mit der Einbringeinrichtung 20 wird der durch das Rammen erzeugte Hydroschall durch nicht dargestellte Dämpferelemente, die beispielsweise als gasgefüllte, flexible Dämpferelemente ausgestaltet sind und an dem Trägerelement 60 befestigt sind, gedämpft. Das Trägerelement 60 ist zusammen mit den Dämpferelementen innerhalb des Rahmens 80 oder der sogenannten Box untergebracht, wenn sich der Rahmen 80 auf dem Wasserfahrzeug befindet und zum Gewässergrund 3 abgelassen wird.

Dazu wird der Rahmen über Halteelemente 47 von der Kraneinrichtung an dem Wasserfahrzeug 2 abgelassen und gegebenenfalls davon getrennt, wobei der Rahmen über andere Halteelemente 47 an dem Rumpf 10 befestigt wird oder daran gekoppelt bleibt.

An dem Rumpf 10 des Wasserfahrzeugs 1 sind darüber hinaus Kompressoren angeordnet, über die Druckluft durch eine Druckluftleitung zu einer Druckluftverteileinrichtung geleitet wird, die sich in einer Variante der Erfindung ebenfalls an oder in dem Rahmen 80 befindet. Somit wird während des Einbringvorganges des Pfahles 70, beispielsweise durch Rammen oder Bohren, ein Blasenschleier erzeugt, der sich um den zu verankernden Gegenstand 70 herum erstreckt, um eine weitere Verringerung der Lärmbelästigung durch das Einbringen des Gegenstandes 70 zu vermeiden. Der Blasenschleier kann sich innerhalb und/oder außerhalb des Trägerelementes nach oben zur Wasseroberfläche 2 bewegen. Das Trägerelement 60 ist so ausgebildet, dass Wasser durch die Zwischenräume im Trägerelement, das insbesondere als Netz oder Gitter ausgebildet ist, hindurchtreten kann. Die Dämpferelemente können sich innerhalb oder außerhalb des schlauchförmigen Trägerelementes 60 befinden und auch beidseitig daran befestigt sein. Die Hydroschalldämpfungseinrichtung kann somit sowohl mit als auch ohne Blasenschleier ausgestaltet und eingesetzt werden.

Nach dem Verankern des Gegenstandes 70 in dem Gewässerboden 3, wird der Rahmen 80 zusammen mit den Dämpferelementen, ggf. der Druckluftverteileinrichtung sowie dem Trägerelement 60 über die Halteeinrichtungen 47 an die Oberfläche gezogen. Dies erfolgt über Winden oder dergleichen, die auf dem Wasserfahrzeug 1 angeordnet sind.

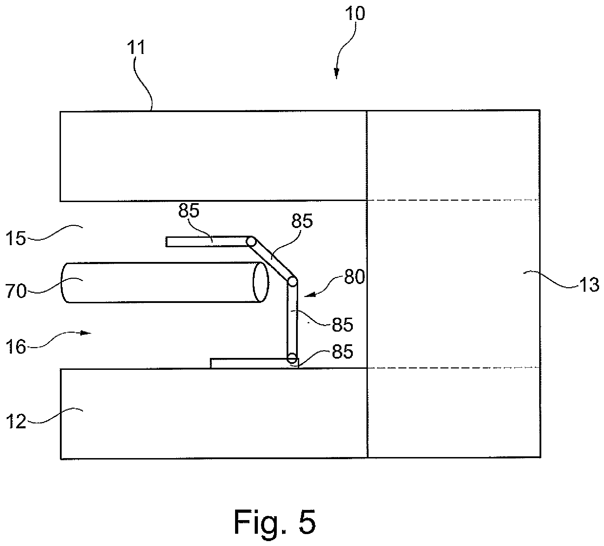

Figur 5 zeigt eine Variante der Erfindung, bei der sich der Rahmen 80 nicht wie bei der Figur 1 oberhalb des angehobenen Pfahles 70 an der Kraneinrichtung befindet, sondern bereits am Rumpf 10 festgelegt ist, entsprechend der Endposition in der Figur 2. In der Figur 5 ist zu erkennen, dass der Rumpf 10 aus zwei Teilrümpfen 11, 12 besteht, die über eine Traverse 13 miteinander verbunden sind. Zwischen den beiden Teilrümpfen 11, 12 ist ein Freiraum 15 ausgebildet, von dem aus der zu verankernde Gegenstand 70 in das Wasser abgelassen und in den Gewässerboden 3 eingebracht und dort verankert werden kann. Der Rahmen 80 befindet sich innerhalb des Freiraums 15, der zumindest einen vorderen Zugang 16 aufweist, sodass der einzubringende Gegenstand 70 über den Rumpf 10 nach vorne hinaus ragen kann, wenn dieser schwimmend transportiert werden soll. Grundsätzlich ist es auch möglich, dass der Rumpf 10 auch am Bug geschlossen ausgebildet ist, sodass der Freiraum 15 allseitig von Teilrümpfen umgeben ist. Ebenso können zwei oberhalb der Wasserlinie 2 an den Teilrümpfen 11, 12 angeordneten Traversen 13 zusammen mit den Teilrümpfen in Draufsicht den Freiraum 15 vollständig umgeben, unterhalb der Traversen 13 jedoch einen in Längserstreckung des Rumpfes 10 gerichteten Durchgang ermöglichen, der am Bug und am Heck einen Zugang 16 aufweist. Alternativ ist der Freiraum 15 allseitig von dem Rumpf 10 oder den Teilrümpfen bis zur Wasseroberfläche 2 umschlossen. Der einzubringende Gegenstand 70 oder Pfahl ist dann entweder nicht länger als der in dem Schiff befindliche Freiraum 15, der keinen Boden aufweist und ein Absenken des Gegenstandes 70 zulässt, oder der Gegenstand 70 wird anders gehandhabt und senkrecht durch den Freiraum 15 in Richtung auf den Gewässerboden 3 abgelassen.

In der Figur 5 ist zu erkennen, dass der Rahmen 80 aus mehreren Segmenten 85 besteht, die gelenkig und/oder verschieblich aneinander gelagert sind. Die Segmente 85 sind der dargestellten Phase des Einbringens des Gegenstandes 70 so zueinander gelagert, dass der Gegenstand 70 in den geöffneten Rahmen 80 eingebracht werden kann. Dies erfolgt durch das Anheben des Gegenstandes 70 an einem Ende und das Absenken und Verschwenken des anderen Endes um den oberen Drehpunkt.

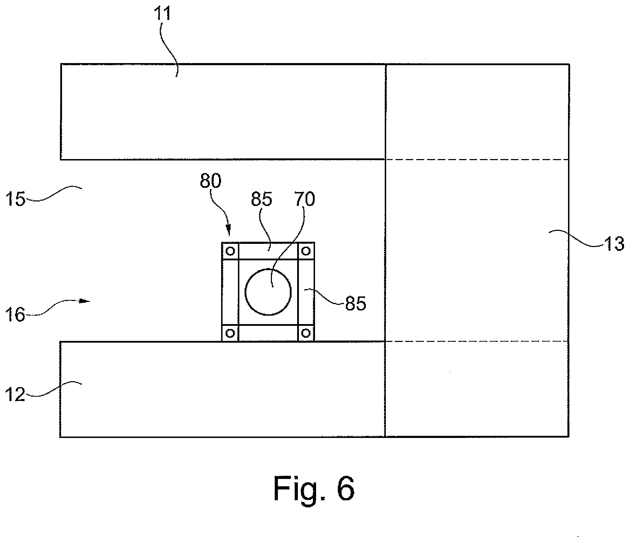

Die sich dadurch vor dem Einbringen des Gegenstandes in den Gewässerboden ergebende Stellung ist in der Figur 6 dargestellt. Der einzubringende Gegenstand 70 befindet sich in einer vertikalen Position und ist auf dem Gewässerboden 3 aufgesetzt. Der Rahmen 80 ist geschlossen und umgibt den Pfahl oder Gegenstand 70 vollumfänglich. Anschließend wird über Winden oder dergleichen der Rahmen 80 auf den Gewässerboden 3 abgesenkt und über Halteeinrichtungen 47, wie in den Figuren 1 bis 4 vorbeschrieben, abgesenkt. Nach dem Ablassen und Absenken wird dann über die Einbringeinrichtung 20 der Gegenstand 70 in dem Gewässerboden 3 verankert.

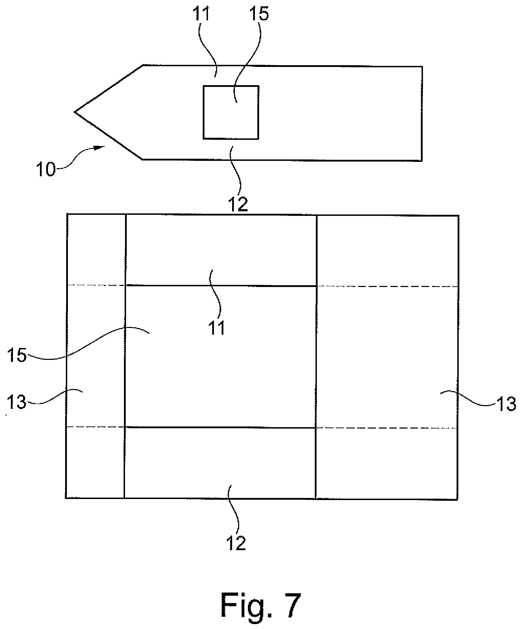

In der Figur 7 sind zwei Varianten der Rumpfform dargestellt. Die obere Darstellung zeigt eine herkömmliche Rumpfform 10 mit einem zentralen Schacht, der einen Durchgang zu dem Gewässer ermöglicht. Der Rumpfboden ist im Bereich des Schachtes entfernt oder entfernbar, so dass der nicht dargestellte Gegenstand durch das Wasserfahrzeug hindurch in den Gewässerboden eingebracht werden kann. Der Freiraum 15 befindet sich innerhalb des Rumpfes 10, die Teilrümpfe 11, 12 verlaufen rechts und links des Freiraumes 15. Die untere Darstellung zeigt einen Rumpf 10 wie in den Figuren 5 und 6, jedoch mit zwei Traversen oder Querträgern 13, die sich oberhalb der beiden parallel verlaufenden Teilrümpfe 11, 12 erstrecken. Der Freiraum 15 wird in der Draufsicht von den Traversen 13 und den Teilrümpfen 11, 12 umgeben.

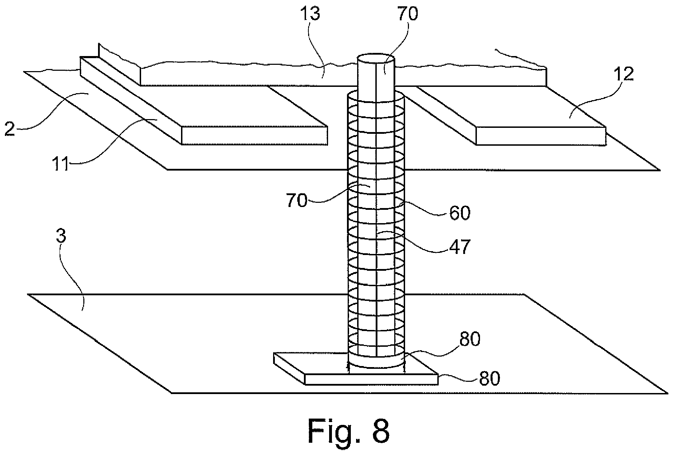

In der Figur 8 ist das Wasserfahrzeug 1 mit den beiden Teilrümpfen 11, 12 sowie der Traverse 13 schematisch dargestellt. Der einzubringende Gegenstand 70 befindet sich in der vertikalen Position, der Rahmen 80 ist bereits auf den Gewässergrund 3 abgelassen, das Trägerelement 60 in Gestalt eines schlauchartigen Netzes mit den Halteelementen 47 reicht von dem Rahmen 80 bis zur Gewässeroberfläche 2 und umgibt den Gegenstand 70 umfänglich. An dem Trägerelement 60, das als Netz oder Gitter ausgebildet ist, sind nicht dargestellte Dämpfelemente 65 befestigt. Das Trägerelement 60 stellt die erste Maßnahme zur Schalldämpfung bei einem Einbringen des Gegenstandes 70 in den Gewässergrund 3 dar. Zusätzlich zu dem Trägerelement 60 kann über eine Druckluftverteileinrichtung ein Blasenschleier innerhalb oder außerhalb des Trägerelementes 60 vorgesehen sein.

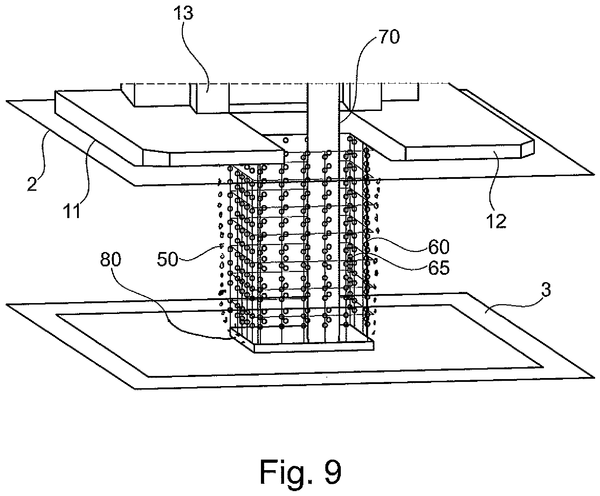

Eine Variante der Erfindung ist in der Figur 9 gezeigt, bei der der Rahmen 80 in einem größeren Abstand zu dem einzubringenden Gegenstand 70 herum angeordnet ist. Die Maschenweite des Trägerelementes 60, das sich von dem Rahmen 80 bis zur Wasseroberfläche 2 erstreckt, ist größer als die des Trägerelementes 60, das in der Figur 8 einen kreisförmigen Querschnitt aufweist und sich in der Nähe des einzubringenden Gegenstandes 70 befindet. In der Figur 9 sind die Dämpfelemente 65 zu erkennen, die an dem Trägerelement 60 befestigt sind. Ebenfalls ist in der Figur 9 zu erkennen, dass ein Blasenschleier 50 in Kombination mit den gasgefüllten, flexiblen Dämpfelementen 65 verwendet wird. Der Blasenschleier 50 entsteht durch Druckluft, die über eine Druckluftverteileinrichtung an dem Rahmen 80 umfänglich um das Trägerelement 60 herum ausgebildet wird.

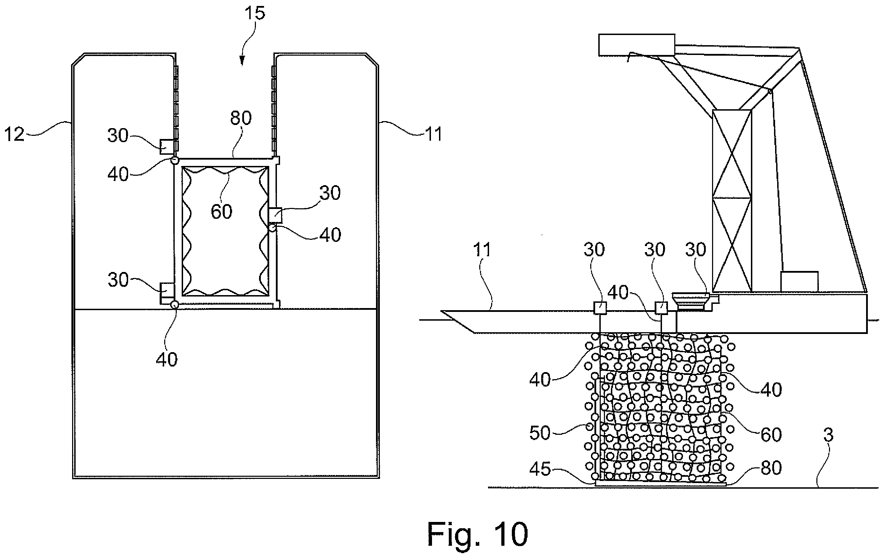

Figur 10 zeigt in einer Seitenansicht und in einer Draufsicht die Ausgestaltung gemäß Figur 9, bei der der Rahmen 80 auf dem Gewässergrund 3 abgesenkt ist. Die rechte Darstellung zeigt eine Teilschnittdarstellung des Wasserfahrzeugs 1 mit dem Teilrumpf 11, auf dem Kompressoren 30 angeordnet sind, die Druckluft über Druckluftleitungen 40 zu dem auf dem Gewässergrund 3 befindlichen Rahmen 80 pumpen. Die Druckluftleitungen 40 münden in einer Druckluftverteileinrichtung 45, die im dargestellten Ausführungsbeispiel vollständig um den Rahmen 80 herum umlaufend ausgebildet ist. Die Druckluftverteileinrichtung 45 kann in oder an dem Rahmen 80 befestigt sein und verteilt bei einer vollumfänglichen Anordnung die Druckluft um den nicht dargestellten, in dem Gewässerboden 3 zu verankernden Gegenstand.

In der linken Darstellung der Figur 10 ist zu erkennen, dass das Trägerelement 60 innerhalb des Rahmenumfanges angeordnet ist und somit die Druckluftverteileinrichtung 45 einen geschlossenen Umfang ausbildet. Durch den geschlossenen Umfang ist es möglich, dass ein geschlossener Blasenschleier 50 innerhalb des Freiraums 15 zwischen den Teilrümpfen 11, 12 erzeugt wird. Das Blasenschleier 50 verläuft also auf der Innenseite der Teilrümpfe 12 und überbrückt den Abstand zwischen den beiden Teilrümpfen 11, 12.

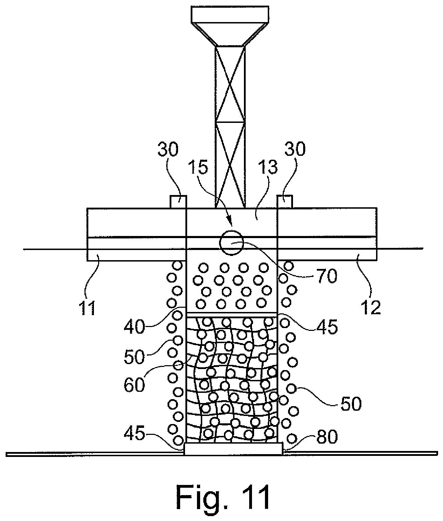

Figur 11 zeigt die Variante gemäß Figur 10 in einer Frontalansicht zusammen mit einem noch nicht angehobenen, einzubringenden Gegenstand 70, der sich schwimmend zwischen den Teilrümpfen 11, 12 befindet. In der Figur 11 ist zu erkennen, dass sich das Trägerelement 60 frontal nicht bis an die Wasseroberfläche erstreckt, während an den Seitenkanten, die parallel zu der Längserstreckung der Teilrümpfe verlaufen, das Trägerelement 60 bis zur Wasseroberfläche 2 reicht. Durch die zum Bug hin abgesenkte Höhe des Trägerelementes 60 ist es möglich, beim Anheben des zu verankernden Gegenstandes 70 diesen über den oberen Rand des Trägerelementes 60 zu transportieren, ohne den gesamten Gegenstand vollständig aus dem Wasser heben zu müssen. Dies vereinfacht die Positionierung des zu verankernden Gegenstandes 70. Der Gegenstand 70 befindet sich in dem Freiraum 15 zwischen den beiden Teilrümpfen 11, 12 und ragt bugseitig über diesen nach vorne hinaus. Es können zwei Druckluftverteileinrichtungen 45 auf unterschiedlichen Ebenen angeordnet sein, die Druckluftverteileinrichtung 45 am oberen Abschluss des querverlaufenden Trägerelementabschnittes kann gleichzeitig als Querstabilisierung dienen und führt zu einer erhöhten Blasendichte aufgrund eines zusätzlichen Druckluftstromes, der über die Kompressoren 30 und die Druckluftleitungen 40 in die Druckluftverteileinrichtungen 45 geleitet wird. Die Blasen 50 treten innerhalb und außerhalb des Trägerelementes 60 aus der Druckluftverteileinrichtung 45 aus und steigen nach oben.

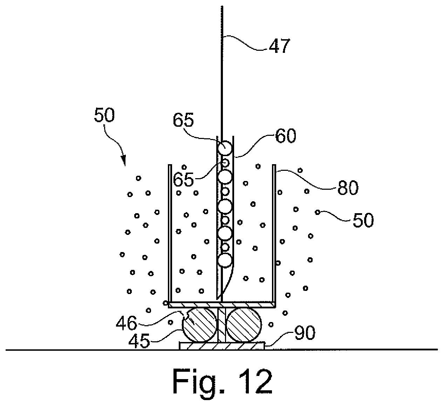

Eine Detailansicht der Druckluftverteileinrichtung gemäß der Figuren 10 und 11 ist in der Figur 12 gezeigt. Ein Rahmen 80, der beispielsweise als u-förmiger, vollständig umlaufender Rahmen ausgebildet sein kann, ist über Halteelemente 47, beispielsweise ein Stahlseil, mit Winden an dem Wasserfahrzeug verbunden und kann darüber angehoben oder abgesenkt werden. Innerhalb des Rahmens 80 ist ein Trägerelement 60 angeordnet, das sich nach oben in Richtung der Wasseroberfläche erstreckt und an dem oder in dem Hydroschalldämpferelemente 65 unterschiedlicher Größe angeordnet sind. Die Dämpferelemente 65 sind flexibel und gasgefüllt, sie können als Hohlkörper oder Schaumkörper ausgebildet sein. Der Rahmen 80, das Trägerelement 60, die Halteelemente 47 und die Hydroschalldämpferelemente 65 können Teil der Druckluftverteileinrichtung sein.

Unterhalb des Rahmens 80 ist ein Gewicht oder ein Ballasteinrichtung 90 angeordnet, die als T-Träger ausgebildet ist und mit dem Querschenkel bodenseitig orientiert an dem Rahmen 30 befestigt ist. In dem Zwischenraum zwischen dem Boden des Rahmens 80 und dem T-Träger sind im dargestellten Beispiel zwei Druckluftverteileinrichtungen 45 angeordnet, in denen Ausströmöffnungen 46 ausgebildet sind. Die Druckluftverteileinrichtungen 45 können als Rohre oder Schläuche ausgebildet sein, die Ausströmöffnungen 46 weisen in dem dargestellten Ausführungsbeispiel in einander entgegengesetzte Richtungen, sodass beiderseits des Trägerelementes 60 ein Blasenschleier 50 entsteht, also bei einem geschlossenen Umfang des Trägerelementes auf der Innenseite und auf der Außenseite. Die Ausströmöffnungen 46 können auch nach unten gerichtet sein, sodass die Druckluft in Richtung auf den Gewässerboden 3 gerichtet ist, um einen möglichst durchgehenden Blasenschleier 50 von dem Gewässerboden 3 bis zu der Gewässeroberfläche 2 zu erzeugen.

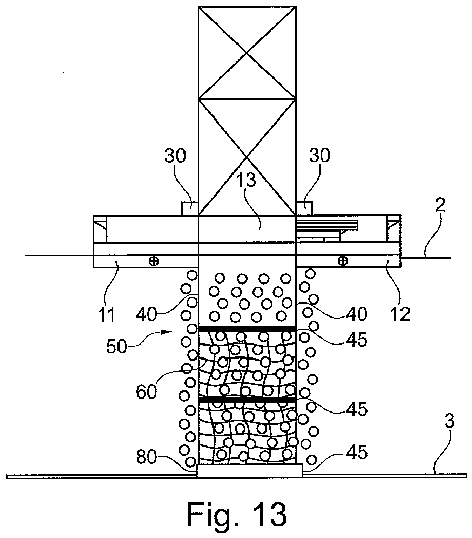

Eine Variante eines Wasserfahrzeugs ist in der Figur 13 gezeigt, bei der insgesamt drei Druckluftverteileinrichtungen 45 auf drei unterschiedlichen Höhen angeordnet sind. Im dargestellten Ausführungsbeispiel ist die Frontalansicht gezeigt, bei der die Druckluftverteileinrichtungen 45 jeweils quer zur Längserstreckung der Teilrümpfe 11, 12 verlaufen. Die Kompressoren 30 pumpen jeweils Druckluft durch die Druckluftleitungen 40 zu den Druckluftverteileinrichtungen 45, die neben einer reinen Quererstreckung sich auch vollumfänglich um den nicht dargestellten einzubringenden Gegenstand 70 oder um den geschlossenen Rahmen 80 oder das geschlossen ausgebildete Trägerelement 60 herum erstrecken.

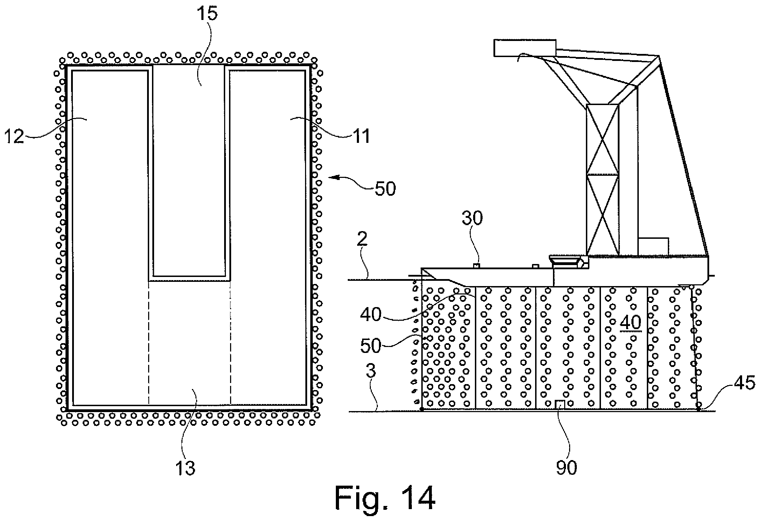

Eine dritte Variante eines Wasserfahrzeugs ist in der Figur 14 gezeigt, bei der eine Druckluftverteileinrichtung 45 außen um den Umfang des Wasserfahrzeuges 1 herum angeordnet ist. Auch hier führen von Kompressoren 30 Druckluftleitungen 40 zu der Druckluftverteileinrichtung 45, in der nicht dargestellte Ausströmöffnungen 46 in unterschiedlichen Richtungen und auch in gleichen Richtungen in unterschiedlichen oder gleichen Abständen zueinander angeordnet sind, um einen Blasenschleier 50 zu erzeugen. Der Blasenschleier 50 erstreckt sich um das gesamte Wasserfahrzeug 1 herum, also um die beiden Teilrümpfe 11 und den zwischen den Teilrümpfen 11, 12 gebildeten Freiraum 15 unter Einschluss des Freiraums 15. Sofern kein Rahmen an der Druckluftverteileinrichtung 45 angeordnet ist, der über Halteeinrichtungen 47 absenkbar ist, können an der Druckluftverteileinrichtung 45 auch separate Ballastelemente oder Ballasteinrichtungen 90 angeordnet sein, um die Druckluftverteileinrichtung 45 an dem Gewässerboden 3 zu halten.

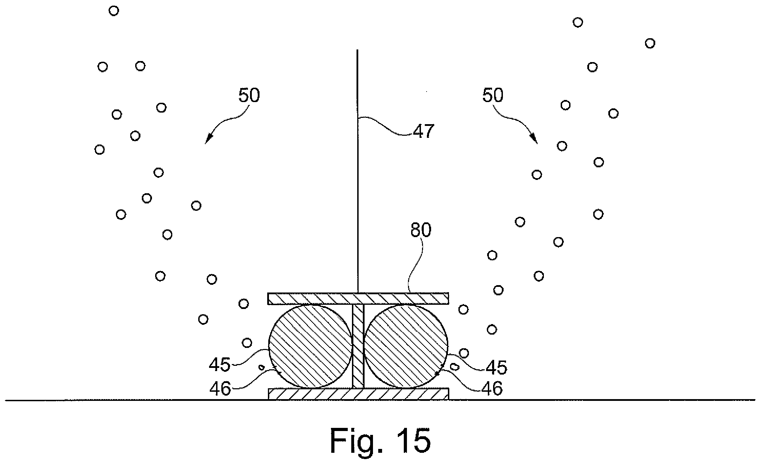

Figur 15 zeigt eine Variante eines Wasserfahrzeugs gemäß Figur 14 in einer Detailansicht, bei der die Druckluftverteileinrichtungen 45 in einem H-Träger angeordnet sind. Die Druckluftverteileinrichtungen 45 können als Rohre oder Schläuche ausgebildet sein, der Rahmen 80 ist über die Halteelemente 47 in Gestalt von Ketten oder Seilen absenkbar oder anhebbar ausgebildet. Der Rahmen 80 kann umlaufend ausgebildet sein, alternativ können auch nur Rahmensegmente ausgebildet sein, die beweglich aneinander oder auch getrennt voneinander über die Druckluftverteileinrichtungen 45 miteinander verbunden sind. Der Rahmen 80 dient gleichzeitig als Gewicht, um die Druckluftverteileinrichtungen 45 mit den Ausströmöffnungen 46 an dem Gewässerboden zu halten, wenn Druckluft über die nicht dargestellte Druckluftleitung eingeleitet und aus den Ausströmöffnungen 46 zur Ausbildung eines Blasenschleiers 59 herausgepumpt wird. Die Ausströmöffnungen 46 können unterschiedliche Durchmesser aufweisen, um unterschiedlich große Blasendurchmesser in dem jeweiligen Blasenschleier 50 zu erzeugen. Ebenfalls können unterschiedliche Drücke innerhalb der jeweiligen Druckluftverteileinrichtungen 45 vorherrschen, um das Blasenbild der Blasenschleier 50 zu verändern.

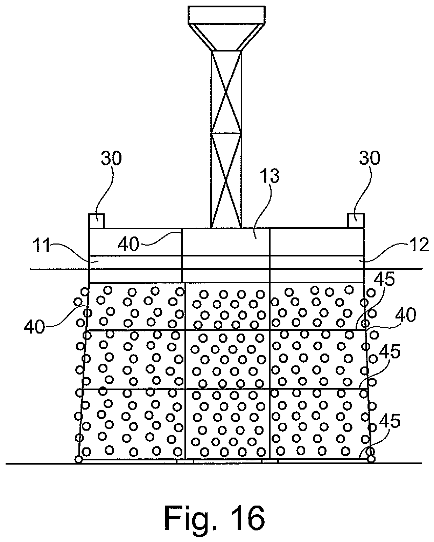

Eine weitere Variante eines Wasserfahrzeugs ist in der Figur 16 gezeigt, bei der der außen umlaufende Blasenschleier 50 über drei, auf unterschiedlichen Niveaus angeordnete Druckluftverteileinrichtungen 45, die um das gesamte Wasserfahrzeug 1 herum angeordnet sind, erzeugt werden. Der außen umlaufende Blasenschleier 50 stellt somit die dritte Stufe der Hydroschalldämpfung dar, der Blasenschleier 50 ist dann relativ weit weg von der Schallquelle positioniert.

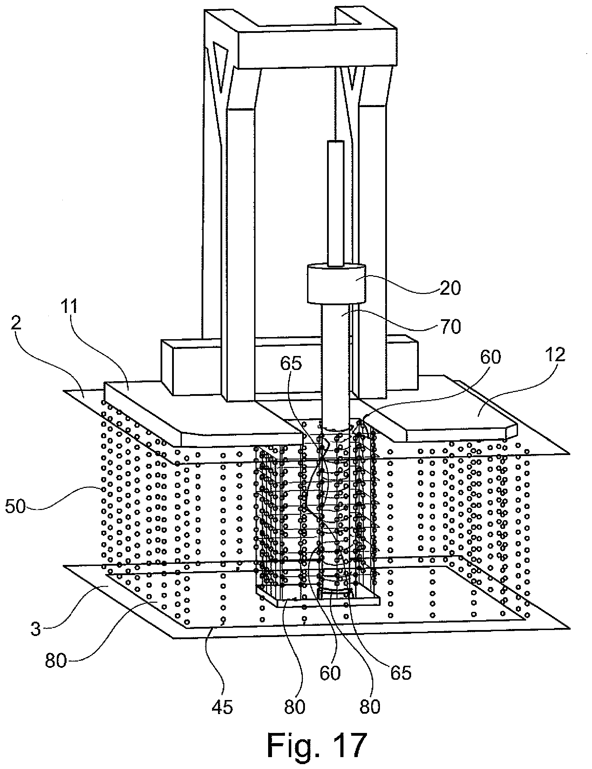

In Figur 17 sind alle drei Komponenten der Hydroschalldämpfung zusammen mit dem Wasserfahrzeug 1 gezeigt. Zwischen den beiden Teilrümpfen 11, 12 wird über die Einbringeinrichtung 20 der einzubringende Gegenstand 70, beispielsweise ein Pfahl, in den Gewässerboden 3 eingerammt. Direkt um den Pfahl 70 herum angeordnet ist ein Trägerelement 60 mit Dämpferelementen 65. Das erste Trägerelement 60 erstreckt sich von dem Gewässerboden 3 bis zu der Wasseroberfläche 2 und kann gegebenenfalls auf dem Gewässerboden 3 aufliegen.

Etwas weiter davon entfernt, also radial zu dem ersten Trägerelement 60 beabstandet, ist ein zweites Trägerelement 60 angeordnet. Auch dieses Trägerelement 60 ist bodenseitig an einem rechteckigen Rahmen 80 gelagert und erstreckt sich bis zur Wasseroberfläche 2. An dem zweiten Trägerelement 60, das einen eckigen Querschnitt ausbildet und innerhalb des Freiraumes 15 zwischen den beiden Teilrümpfen 11, 12 angeordnet ist, sind Dämpferelemente 65 befestigt, die aus gasgefüllten Hohlkörpern oder Schaumstoffelementen bestehen können. Zusammen mit diesen Hydroschalldämpferelementen 65 und einem Blasenschleier 50, der über eine Druckluftverteileinrichtung 45 an dem Rahmen 80 von dem Gewässerboden 3 bis zu der Gewässeroberfläche 2 verläuft, kann eine weitere Dämpfung der durch das Rammen des Pfahles entstehenden Schallemissionen bewirkt werden. Es können mehrere Druckverteileinrichtungen 45 vorgesehen sein, die auf unterschiedlichen Höhenniveaus angeordnet sind. Die Druckluftverteileinrichtungen 45 können Ausströmöffnungen 46 aufweisen, die in unterschiedliche Richtungen orientiert sind, um so einen doppelwandigen, voneinander beabstandeten Blasenschleier 50 auszubilden.

Die dritte Dämpferkomponente bildet der außen um das Wasserfahrzeug 1 ausgebildete Blasenschleier 50, der den Rumpf 10 mit den beiden Teilrümpfen 11, 12 und den dazwischen befindlichen Freiraum 15 umgibt. Auch hier können mehrere Druckluftverteileinrichtungen 45 auf unterschiedlichen Höhen angeordnet sein, um über unterschiedliche Drücke oder unterschiedliche Ausströmöffnungsdurchmesser die gewünschten Charakteristika eines Blasenschleiers 50 zu erzielen.

## Patentansprüche

1. Wasserfahrzeug mit einem Rumpf (10), einer daran angeordneten Einbringeinrichtung (20) für einen im Wasser zu verankernden Gegenstand (70) und zumindest einem Kompressor (30) mit zumindest einer in das Wasser führenden Druckluftleitung (40), die mit zumindest einer Druckluftverteileinrichtung (45) gekoppelt ist, die eine horizontale Erstreckung und eine Vielzahl von zueinander beabstandeten Ausströmöffnungen (46) zur Erzeugung eines Blasenschleiers (50) unterhalb des Rumpfes (10) aufweist, **dadurch gekennzeichnet, dass** der Rumpf (10) zumindest zwei Teilrümpfe (11, 12) aufweist, die zueinander beabstandet angeordnet und miteinander verbunden sind und sich zwischen den Teilrümpfen (11, 12) ein Freiraum (15) befindet, in dem eine erste Druckluftverteileinrichtung (45) angeordnet ist, die derart angeordnet und eingerichtet ist, einen Blasenschleier (50) zu erzeugen, der den Freiraum (15) zumindest teilweise umgibt und welcher Blasenschleier auch die Einbringungseinrichtung, beziehungsweise den in den Unterwasserboden einzubringenden Gegenstand, umfänglich umgibt und wobei eine zweite Druckluftverteileinrichtung (45) angeordnet ist, die sich um den Außenumfang des Rumpfes (10) erstreckt.

2. Wasserfahrzeug nach Anspruch 1, **dadurch gekennzeichnet, dass** die Druckluftverteileinrichtung (45) einen geschlossenen Umfang ausbildet und/oder als Rohr oder Schlauch ausgebildet ist.

3. Wasserfahrzeug nach einem der voranstehenden Ansprüche, **dadurch gekennzeichnet, dass** die Ausströmöffnungen (46) zueinander gleich beabstandet angeordnet sind.

4. Wasserfahrzeug nach einem der voranstehenden Ansprüche, **dadurch gekennzeichnet, dass** an der Druckluftverteileinrichtung (45) Ballasteinrichtungen (90) angeordnet sind.

5. Wasserfahrzeug nach einem der voranstehenden Ansprüche, **dadurch gekennzeichnet, dass** die Druckluftverteileinrichtung (45) über Halteeinrichtungen (47) absenkbar an dem Rumpf (10) befestigt ist.

6. Wasserfahrzeug nach einem der voranstehenden Ansprüche, **dadurch gekennzeichnet, dass** der Freiraum (15) von den Teilrümpfen (11, 12) umgeben oder zumindest einen seitlichen Zugang (16) aufweist, wobei bevorzugt die Druckluftverteileinrichtung (45) den Umfang des Freiraumes (15) umgibt oder unter Überbrückung des zumindest einen seitlichen Zugangs (16) einen umfänglich geschlossenen Blasenschleier (50) auszubilden eingerichtet und angeordnet ist.

7. Wasserfahrzeug nach einem der voranstehenden Ansprüche, **dadurch gekennzeichnet, dass** zumindest ein den zu verankernden Gegenstand seitlich umgebendes Trägerelement (60), insbesondere Netz, Stahlrohrkonstruktion, Platten und/oder Gitter, unterhalb des Rumpfes (10) angeordnet ist und optional mehrere Trägerelemente (60) teleskopierbar aneinander angeordnet, insbesondere mit unterschiedlichen Durchmessern oder zueinander korrespondierenden Innen- und Außenabmessungen ineinander verschieblich gelagert sind.

8. Wasserfahrzeug nach Anspruch 7, **dadurch gekennzeichnet, dass** an dem Trägerelement (60) oder den Trägerelementen (60) gasgefüllte, flexible Dämpferelemente (65) befestigt sind.

9. Wasserfahrzeug nach einem der Ansprüche 7 oder 8, **dadurch gekennzeichnet, dass** die Druckluftverteileinrichtung (45) derart angeordnet und eingerichtet ist, dass sie einen Blasenschleier (50) erzeugt, der das zumindest eine Trägerelement (60) umgibt und/oder von dem zumindest ein Trägerelement (60) umgeben ist.

10. Wasserfahrzeug nach einem der Ansprüche 7 bis 9, **dadurch gekennzeichnet, dass** das zumindest eine Trägerelement (60) an einem Rahmen (80) befestigt ist.

11. Wasserfahrzeug nach einem der voranstehenden Ansprüche, **dadurch gekennzeichnet, dass** die Druckluftverteileinrichtung (45) an oder in einem Rahmen (80) aus einem formstabilen Material gelagert ist.

12. Wasserfahrzeug nach Anspruch 10 oder 11, **dadurch gekennzeichnet, dass** der Rahmen (80) ein U-Profil, H-Profil und/oder ein T-Profil aufweist.

13. Wasserfahrzeug nach einem der Ansprüche 10 bis 12, **dadurch gekennzeichnet, dass** der Rahmen (80) aus miteinander verbundenen Segmenten (85) aufgebaut ist, wobei die Verbindungsstellen eine Relativbewegung der Segmente (85) zueinander zulassen und/oder der Rahmen (80) faltbar oder klappbar ausgebildet ist, wobei dem Rahmen (80) optional ein Antrieb zum Öffnen und Schließen zugeordnet ist.

14. Wasserfahrzeug nach einem der voranstehenden Ansprüche, **dadurch gekennzeichnet, dass** Ausströmöffnungen (46) in unterschiedlichen Richtungen orientiert an der Druckluftverteileinrichtung (45) angeordnet sind, wobei bevorzugt mehrere Druckluftverteileinrichtungen (45) in unterschiedlichen Höhen angeordnet sind oder Druckluftverteileinrichtungen (45) in unterschiedlichen Höhen unterschiedlich große Ausströmöffnungen (46) und/oder im Betrieb unterschiedlich große Innendrücke aufweisen.

## Claims

1. A watercraft having a hull (10), an introduction installation (20) for an object (70) to be anchored in the water, said introduction installation (20) being disposed on said hull (10), and at least one compressor (30) having at least one compressed-air line (40) which leads into the water and is coupled to at least one compressed-air distribution installation (45) which has a horizontal extent and for generating a bubble curtain (50) below the hull (10) has a multiplicity of mutually spaced apart outflow openings (46), **characterized in that** the hull (10) has at least two sub-hulls (11, 12) which are disposed so as to be mutually spaced apart and connected to one another, between the sub-hulls (11, 12) a void (15) is situated in which a first compressed-air distribution installation is disposed, disposed and arranged in a way to create a bubble curtain (50) surrounding the void (15) at least partially and as well the introduction installation or the object to be introduced into the underwater bed, respectively, circumferentially and wherein a second compressed-air distribution installation (45) is arranged, extending about the external circumference of the hull (10).

2. The watercraft as claimed in claim 1, **characterized in that** the compressed-air distribution installation (45) configures a closed circumference and/or as a tube or hose.

3. The watercraft as claimed in one of the preceding claims, **characterized in that** the outflow openings (46) are configured having identical mutual spacings.

4. The watercraft as claimed in one of the preceding claims, **characterized in that** ballast installations (90) are disposed on the compressed-air distribution installation (45).

5. The watercraft as claimed in one of the preceding claims, **characterized in that** the compressed-air distribution installation (45) by way of holding installations (47) is fastened so as to lowerable on the hull (10).

6. The watercraft as claimed in one of the preceding claims, **characterized in that** the void (15) is surrounded by the sub-hulls (11, 12), or has at least one lateral access (16), wherein the compressed-air distribution installation (45) surrounds the circumference of the void (15), or while bridging the at least one lateral access (16) configures a circumferentially closed bubble curtain (50).

7. The watercraft as claimed in one of the preceding claims, **characterized in that** at least one support element (60), in particular a net, a tubular steel construction, plates and/or meshes, laterally surrounding the object to be anchored is/are disposed below the hull (10) and optionally a plurality of support elements (60) are disposed in a telescoping manner on one another, in particular with dissimilar diameters or mutually corresponding internal and external dimensions being mounted so as to be displaceable into one another.

8. The watercraft as claimed in claim 7, **characterized in that** gas-filled flexible damper elements (65) are fastened to the support element (60) or the support elements (60).

9. The watercraft as claimed in one of claims 7 or 8, **characterized in that** the compressed-air installation (45) is disposed and arranged that it creates a bubble curtain (50) that surrounds the at least one support element (60) and/or is surrounded by the at least one support element (60).

10. The watercraft as claimed in one of claims 7 to 9, **characterized in that** the at least one support element (60) is fastened to a frame (80).

11. The watercraft as claimed in one of the preceding claims, **characterized in that** the compressed-air distribution installation (45) is mounted on or in a frame (80) from a dimensionally stable material.

12. The watercraft as claimed in claim 10 or 11, **characterized in that** the frame (80) has a U-profile, an H-profile, and/or a T-profile.

13. The watercraft as claimed in one of claims 10 to 12, **characterized in that** the frame (80) is constructed from interconnected segments (85), wherein the connection points permit a mutual relative movement of the segments (85) and/or the frame (80) is configured so as to be foldable or collapsible, wherein optionally the frame (80) for opening and closing is assigned a drive.

14. The watercraft as claimed in one of the preceding claims, **characterized in that** outflow openings (46) are disposed on the compressed-air distribution installation (45) so as to be oriented in dissimilar directions, wherein preferably a plurality of compressed-air distribution installations (45) are disposed at dissimilar heights or compressed-air distribution installations (45) at dissimilar heights have dissimilarly sized outflow openings (46) and/or dissimilarly high internal pressures.

## Revendications

1. Bateau comportant une coque (10), un dispositif d'insertion (20) disposé sur celle-ci pour un objet (70) à ancrer dans l'eau, et au moins un compresseur (30) comportant au moins une conduite d'air comprimé (40) menant dans l'eau et couplée à au moins un dispositif de distribution d'air comprimé (45) qui présente une extension horizontale et une pluralité d'ouvertures de sortie (46) espacées les unes des autres pour produire un rideau de bulles (50) en dessous de la coque (10), **caractérisé en ce que** la coque (10) présente au moins deux coques partielles (11, 12) disposées à distance l'une de l'autre et reliées entre elles, et un espace libre (15) se trouve entre les coques partielles (11, 12), dans lequel est agencé un premier dispositif de distribution d'air comprimé (45) qui est disposé et conçu de manière à produire un rideau de bulles (50) qui entoure au moins partiellement l'espace libre (15), ledit rideau de bulles entourant également de manière circonférentielle le dispositif d'insertion voire l'objet à insérer dans le fond subaquatique, et il est prévu un second dispositif de distribution d'air comprimé (45) qui s'étend autour de la circonférence extérieure de la coque (10).

2. Bateau selon la revendication 1, **caractérisé en ce que** le dispositif de distribution d'air comprimé (45) forme une circonférence fermée et/ou est réalisé sous forme de tube ou de tuyau.

3. Bateau selon l'une des revendications précédentes, **caractérisé en ce que** les ouvertures de sortie (46) sont disposées de façon équidistante les unes des autres.

4. Bateau selon l'une des revendications précédentes, **caractérisé en ce que** des dispositifs de lestage (90) sont disposés sur le dispositif de distribution d'air comprimé (45).

5. Bateau selon l'une des revendications précédentes, **caractérisé en ce que** le dispositif de distribution d'air comprimé (45) est fixé de manière abaissable à la coque (10) par l'intermédiaire de dispositifs de maintien (47).

6. Bateau selon l'une des revendications précédentes, **caractérisé en ce que** l'espace libre (15) est entouré par les coques partielles (11, 12) ou présente au moins un accès latéral (16), et de préférence le dispositif de distribution d'air comprimé (45) entoure la circonférence de l'espace libre (15) ou est conçu et agencé pour former un rideau de bulles (50) fermé sur la circonférence en pontant ledit au moins un accès latéral (16).

7. Bateau selon l'une des revendications précédentes, **caractérisé en ce qu'**au moins un élément porteur (60) entourant latéralement l'objet à ancrer, en particulier un filet, une structure tubulaire en acier, des plaques et/ou des treillis, est disposé en dessous de la coque (10), et optionnellement, plusieurs éléments porteurs (60) sont disposés de manière télescopique les uns par rapport aux autres qui sont en particulier montés de manière déplaçable les uns dans les autres avec des diamètres différents ou avec des dimensions intérieures et extérieures correspondant les unes aux autres.

8. Bateau selon la revendication 7, **caractérisé en ce que** des éléments amortisseurs (65) flexibles remplis de gaz sont fixés à l'élément porteur (60) ou aux éléments porteurs (60).

9. Bateau selon l'une des revendications 7 ou 8, **caractérisé en ce que** le dispositif de distribution d'air comprimé (45) est agencé et conçu de manière à produire un rideau de bulles (50) qui entoure ledit au moins un élément porteur (60) et/ou qui est entouré par ledit au moins un élément porteur (60).

10. Bateau selon l'une des revendications 7 à 9, **caractérisé en ce que** ledit au moins un élément porteur (60) est fixé à un cadre (80).

11. Bateau selon l'une des revendications précédentes, **caractérisé en ce que** le dispositif de distribution d'air comprimé (45) est monté sur ou dans un cadre (80) réalisé en un matériau de forme stable.

12. Bateau selon la revendication 10 ou 11, **caractérisé en ce que** le cadre (80) présente un profil en U, un profil en H et/ou un profil en T.

13. Bateau selon l'une des revendications 10 à 12, **caractérisé en ce que** le cadre (80) est constitué de segments (85) interconnectés, les emplacements de connexion permettant un mouvement relatif des segments (85) les uns par rapport aux autres, et/ou le cadre (80) est réalisé de manière repliable ou rabattable, et optionnellement, un entraînement pour l'ouverture et la fermeture est associé au cadre (80).

14. Bateau selon l'une des revendications précédentes, **caractérisé en ce que** des ouvertures de sortie (46) sont disposées sur le dispositif de distribution d'air comprimé (45) de manière orientée dans des directions différentes, et plusieurs dispositifs de distribution d'air comprimé (45) sont disposés à des hauteurs différentes, ou les dispositifs de distribution d'air comprimé (45) à différentes hauteurs présentent des ouvertures de sortie (46) de taille différente et/ou des pressions internes différentes en fonctionnement.
